**Europäisches Patentamt**

**European Patent Office**

**Office européen des brevets**

(19)

(11) Publication number: **0 061 277**
**B1**

(12) **EUROPEAN PATENT SPECIFICATION**

(45) Date of publication of patent specification: **03.09.86**

(21) Application number: **82301307.3**

(22) Date of filing: **15.03.82**

(51) Int. Cl.⁴: **A 01 N 1/02,** A 61 K 35/12, A 61 K 35/14

(54) **Anaerobic method for preserving whole blood, tissue and components containing living mammalian cells.**

(30) Priority: **16.03.81 US 244137**

(43) Date of publication of application:
**29.09.82 Bulletin 82/39**

(45) Publication of the grant of the patent:
**03.09.86 Bulletin 86/36**

(84) Designated Contracting States:
**CH DE FR GB IT LI SE**

(56) References cited:
FR-A-2 360 606
FR-A-2 450 632
US-A-3 523 938
US-A-3 912 715
US-A-3 937 821
US-A-4 004 975
US-A-4 016 354
US-A-4 153 585
CHEMICAL ABSTRACTS, vol. 74, no. 10, February 15, 1971, page 168, abstract no. 29993q, Columbus Ohio (US) K.H. GAENSHIRT: "Influence of different additives in blood preservation".

(73) Proprietor: **Jost, Leonora I.**
**401 E. 88th Suite 3D**
**New York, N.Y. 10028 (US)**

(72) Inventor: **Jost, Leonora I.**
**401 E. 88th Suite 3D**
**New York, N.Y. 10028 (US)**

(74) Representative: **De Minvielle-Devaux, Ian Benedict Peter et al**
**CARPMAELS & RANSFORD 43, Bloomsbury Square**
**London WC1A 2RA (GB)**

(56) References cited:
**CHEMICAL ABSTRACTS, vol. 92, no. 19, May 12, 1980, page 386, abstract no. 161371m, Columbus Ohio (US) LIONETTI, FABIAN J et al.: "Cryogenic preservation of full units of red blood cells with HES150/0.70".**

Courier Press, Leamington Spa, England.

## Description

The present invention relates to a method for preserving mammalian whole blood, mammalian tissue and various components of either which contain living mammalian cells, such as, e.g., the leukocyte or erythrocyte fraction of blood, a DNA fraction, a protein fraction, an immunoglobulin fraction, etc., and to preserved mammalian whole blood, tissue and components. According to the invention, the preserved whole blood, tissue or components remain in a suspended state, undeteriorated and usable to the same extent as fresh counterparts thereof would be. Effective preservation methods with similar results have long been sought without success. The most effective preservation and storage methods currently in use involve freezing and are in general, effective only for the red blood cell ("RBC") or erythrocyte fraction of mammalian blood and then only to a limited degree. The method of the invention includes the use of an anaerobic system during processing and storing of the blood, tissue or components which precludes bacterial and fungal contamination from air, as well as oxidative changes and which suspends the normal metabolic processes of the living cells contained in the preserved substance during the storage period.

Most methods for long term preservation of mammalian whole blood, tissue or components thereof containing living cells require freezing, since the shelf life of these items under ordinary refrigeration is short. Whole blood, for example, cannot be maintained in usable condition for more than about 21 days under simple refrigeration. This is in part because the various cells continue to carry on their metabolic processes, eventually exhausting their nutrient supplies and deteriorating to such an extent that the blood will, after 21 days storage, contain 30% or more of nonviable cells which, if transfused to a patient will promptly be removed from the patient's circulation as waste material. The freezing procedures currently in clinical use all involve glycerolizing the blood or, more usually, its erythrocyte fraction, freezing the glycerolized mixture, storing and then deglycerolizing after thawing but before use in transfusions and the like. See e.g., Meryman, "Red Cell Freezing: A Major Factor of Blood Banks" included in *Clinical and Practical Aspects of the Use of Frozen Blood* (1977), a publication of the Committee on Workshops of the American Association of Blood Banks. Blood recovered from this method is subject to hazards of bacterial contamination during the deglycerolizing process and, to minimize this problem, current standards require the blood be used within 24 hours of deglycerolizing. In many patients, the residual glycerol in the transfused blood causes allergic reactions and other discomforts. Even when the preserved material is to be used for non-transfusion purposes — e.g., in the laboratory, the presence of residual glycerol and/or bacterial contamination occurring during deglycerolizing may cause problems.

Various preservation methods not in current clinical use have been suggested. In about 1952 when there was wide-spread concern about stockpiling blood platelets for *in vivo* use in case of atomic disaster, it was proposed to preserve the platelet fraction of whole human blood by gelling a mixture of platelets with a composition comprising of gelatin, sodium chloride, sodium acetate and glucose in the weight ratio of 0.3—1.2:0.36:0.08—0.20:2.0 and thereafter maintaining the gelled mixture at a temperature of about 4°C, (i.e., under ordinary refrigeration) as described in Tullis U.S. Patent 2,786,014.

Another proposed method, described by Rinfret et al. in U.S. Patent 3,347,745, contemplated adding mannitol or a high molecular weight water soluble polymer such as polyvinyl pyrrolidone (PVP), dextran or albumin, in at least about 10% by weight, to the erythrocyte fraction of blood and then subjecting the mixture to a temperature below about −100°C until frozen. Ushakoff in U.S. Patent 3,418,209 proposed a glycerolizing treatment involving replacement of at least 60% of the water normally present with glycerine, to render red blood cells stably storable at 4—20°C. Knorpp in U.S. Patent 3,758,382 taught that the freezing method of Rinfret et al. produces a better preserved erythrocyte product if a hydroxyalkyl starch of molecular weight 40,000 to 70,000 and a degree of substitution from 0.5 to 1.0 is used in lieu of mannitol, PVP, dextran or albumin. Deindoerfer et al. in U.S. Patent 3,795,581 advocated treating red blood cells with 10 to 100 millimoles/liter of dihydroxyacetone and then storing at normal refrigerator temperature of about 1 to 6°C.

In U.S. Patent 4,004,975, Lionetti et al. proposed a method for cryopreserving the leukocyte-containing granulocyte fraction of whole blood which employs hydroxyethylstarch (HES) as a combined cryoprotective and sedimenting agent and dimethylsulfoxide as a further cryoprotective agent, followed by freezing of the mixture. Lionetti et al. point out (Col. 3, 11 14—27) that dextran, fibrinogen, gelatin, phytohemagglutinin and PVP have been suggested as cryoprotective agents but are not approved for human use — whereas HES is FDA-approved as both a cryoprotective agent and a sedimenting agent. Lionetti et al. also point out that when white cells have been frozen with dimethylsulfoxide alone or with glycerol, a flow yield of functional white cells is recovered after thawing. The method is said to be of special importance because preserved granulocytes are needed, e.g., to combat severe infections associated with severe granulocytopenia. It is also noted that as of 1975, when Lionetti et al. filed their application, nearly all of the leukocytes from millions of blood collections were wasted due to lack of an effective preservation method.

In contrast to Lionetti et al., Ridgway et al. "Cryopreservation of Platelets Simplified; a Modified Glycerolglucose Method", *Transfusion*, Vol. 20, N. 4, pp. 427—431 (1980) taught that dimethylsulfoxide does act as a cryopreservative for platelets on an effective level but is less desirable than a glycerol-glucose cryoprotective agent because it evolves an objectionable odor on thawing and presents greater potential toxicity problems than the glucose-glycerol.

Dorner et al. in "Efficacy of Leucocyte-Poor Red Blood Cell Suspensions Prepared by Sedimentation in Hydroxyethyl Starch", *Transfusion*, Vol. 15, pp. 439—448 (1973) reported that high molecular weight, HES, as a 6% solution in normal saline, can be used to promote sedimentation of leukocytes from red blood cells or whole blood. Because HES is an FDA-approved plasma volume expander, its use is preferred where the whole blood is to be used for transfusion of human patients with especially high sensitivity to leukocyte-carried antigens, so that efficient and safe leukocyte removal is of extreme importance. Several articles stress the cryo-protective efficacy of HES for frozen erythrocytes, including Allen et al. "Large Unit Red Cell Cryopreservation with Hydrox-ethyl Starch", *Cryobiology 13*, 500—506 (1976), Allen et al. "Post-Thaw Suspension of Red Cells Cryopreserved with Hydroxyethyl Starch", *Cryobiology 15*, 375—381 (1978), Lionetti et al. "Improved Method for the Cryopreservation of Human Red Cells in Liquid Nitrogen with Hydroxyethyl Starch", *Cryobiology 13*, 489—499 (1976); Choudhury et al., "Freeze Preservation of Platelets Using Hydroxyethyl Starch (HES); A Preliminary Report", *Cryobiology 15*, 493—501 (1978); Weatherbee et al., "Coagulation Studies After Transfusion of Hydroxyethyl Starch Protected Frozen Blood in Primates", Transfusion 14, pp. 109—115 (1974) and Allen et al., "Ultrastructure of Red Cells Frozen with Hydroxyethylstarch", Journal of Microscopy 117, pp. 381—394 (1979).

Ganshirt, "On the Influence of Different Additives in Blood Preservation" included in Modern Problems in Blood Preservation, edited by Spielmann et al. (1970) reports on experiments wherein erythrocytes were stored with each of gelatin, dextran, albumin and high molecular weight HES, and these compositions were compared for storage stability to an acid citrate dextrose (ACD) — whole blood mixture as control. Storage time was 5—8 weeks at 4°C under anaerobic conditions. The author cautioned that all of the synthetic materials used contained traces of impurities which may have affected the results. His post-experiment conclusion was that there exists a need for confirmation of the results "by further investigations, including viability studies, before we try an interpretation and before they might have practical consequences".

Various letters to the editor of New England J. Med., 300, pp. 984—985 (1979) discuss the need for rendering whole blood or red blood cells, storable at refrigerator temperatures for times in the order of at least 60 days.

The present invention provides a wide range of advantages over prior art methods of blood preservation. It is applicable to mammalian whole blood and also to mammalian tissue samples or any component of either that contains or comprises living cells. It therefore has the potential for satisfying many needs for living-cell containing components at less cost and in better condition than methods used heretofore. It utilizes a material, HES, which is non-toxic, safe and FDA-approved as a plasma extender. The method of the invention is inexpensive. Preserved blood, tissue, or components treated by the preferred method of this invention can be anaerobically stored under ordinary refrigerator conditions for an indefinite time and, because the metabolic processes of the preserved material are suspended during the period of preservation, the blood, tissue or living cell containing components is ultimately recovered in viable, usable form.

The present invention, in its broadest compass, involves preserving whole blood, tissue, or any component of either, which contains living cells, usually in the presence of an anticoagulant, with an extracellular swelling agent consisting essentially of low molecular weight hydroxyethyl starch (HES), hydroxypropylstarch (HPS) or polystarch (PS). The starch structure may contain between 450 and 1000 repeating glucose units per molecule and preferably contains about 500 units. The temperature is maintained throughout at 1.5 to 4.5°C (35° to 40°F) and the ingredients are thoroughly mixed. In a preferred embodiment wherein the preserved product is to be stored for more than about sixty days, the starch derivative is swelled and crosslinked *in situ* in the presence of the material to be preserved providing in the order of about one crosslink per 20—50 glucose units. This is effected by reacting the starch derivative with a water-soluble cross-linking agent of the acrylamide type. Blood, tissue, or single components of either containing living cells, having been incorporated in this crosslinked HES, HPS or PS may be stored at 1.5 to 4.5°C (35° to 40°F), preferably 3.3°C (38°F), for an indefinite period. It is essential that the swelling, gelation and storage of the substance to be preserved be effected under anaerobic conditions, preferably by purging the container with nitrogen and then excluding air thereafter.

When it is desired to use the preserved substance, the swelled starch derivative may be liquefied and/or the gel may be broken by microwaving or simple wash with an isotonic solution. Acrylamide-type-linking agent, if present, and the preponderance of the starch derivative can be removed by simple filtration and the preserved blood, tissue, or other living cell-containing component in essentially the same condition as at the time of collection or separation, is then ready for use.

Whole blood and RBC preserved according to the invention may be used in mammalian transfusions and for numerous other purposes. Blood and tissue components such as immunoglobulins, antibodies, antigens, antisera, leukocytes and leukocyte interferon, proteins and enzymes, have a myriad of uses when preserved by the method of this invention. Tissue preserved in comminuted or particulate form, and finely divided blood-perfused tissue so preserved also have many uses.

The figures show a preferred type of receptacle for collection, treatment and storage of the material to be preserved. In Figure 1, the receptacle is depicted as it appears during collection, e.g., of whole blood. Figure 2 shows a side view of the receptacle, including its preferred shape. Figure 3 depicts the receptacle with a loose cap over its valves, ready for storage.

The method of the present invention may be used to preserve mammalian whole blood, mammalian tissue containing living cells or any living cell-containing component of either in a state of suspended animation. The method is simple and easy to use. It affords a practical and effective way, much needed in the art, for preserving living cellular material in a fresh undeteriorated state. It accordingly will greatly facilitate stockpiling of mammalian, including human, whole blood and fractions thereof. It affords a superior means of introducing to a mammalian subject, e.g., antisera, recombined DNA fragments, immunoglobulins, antibodies (both monoclonal and other antibodies), antigens and T-cells as to which the subject's own system is deficient. It affords an efficient mechanism of cleansing out undesired substances, e.g., unneeded and undesired antigens, carried by a particular subject's blood and then returning the cleansed blood to the subject. It particularly affords the possibility for removing, e.g., defective leukocytes or T-cells from a subject's own blood, substituting healthy counterpart cells and returning the treated blood to the subject with minimal disruption of the patients autoimmune system and minimal introduction of foreign antigens which might trigger undesired allergic reactions.

The method of this invention thus offers great promise in the treatment of certain allergic, autoimmune and genetic diseases. In addition, it affords an enhanced opportunity to preserve blood and blood fractions which must now be discarded due to aging deterioration. In this regard, this invention affords the opportunity for routinely using preserved whole blood, rather than blood fractions, in transfusions, thus giving the promise of reduced patient shock and easier patient recovery than is sometimes experienced with e.g., transfusion of thawed formerly frozen erythrocyte fractions.

The present invention also affords enhanced and improved means for *in vitro* testing of an individual mammalian patient's blood or tissue under circumstances such that the cells (e.g., antigens, antibodies, T-cells, etc.) to be tested for are maintained in a live state. In addition, it affords the promise of improved *in vitro* blood studies, both for general research purposes and for individual customized purposes designed to determine optimum treatment conditions and methods for particular patients having particular pathological problems. Thus, for example, whole blood, tissue or a specific component of either containing living cells, preserved according to the invention, may be subjected to gel fracture or starch derivative liquefaction, used as a culture medium for, e.g., a desired antigen, antibody, or recombined DNA molecule, returned to the suspended animation condition of the swelled and/or gelled state to facilitate certain types of desired study, the culture reactivated by further swell or gel fracture. By carefully controlling the sequence of swelling or gelling and fracture steps and the periods of cell growth and metabolism, the clinician or researcher will be enabled to obtain *in vitro* data in undeteriorated natural mammalian media which simulate *inter vivos* conditions far more closely than the media now in use for such studies. The fact that interactions between recombined DNA molecules or monoclonal antibodies and their surrounding biological environment stops at room temperature is of particular assistance in planning controlled experiments with such entities wherein the techniques and products of this invention are also used.

The ingredients used in the method and products of this invention are simple and non-toxic. Where the material to be preserved is whole blood, a coagulatable blood fraction, a blood-perfused tissue sample or any other substance that is at least partly readily coagulatable, it is essential that an anticoagulant be admixed therewith promtly after collection from the mammalian donor. While the anticoagulant may be any effective anticoagulant known in the art, the preferred anticoagulant is acidified citrate-dextrose (ACD) which is added in the proportion (weight per volume) known in the art to be effective.

The preferred starch derivative to be utilized in the method and products of this invention is hydroxyethyl starch, because this material is known to be non-antigenic and non-toxic. It is also a Food and Drug Administration-approved plasma extender, swelling agent and cryopreservative. However, hydroxypropyl starch and polystarch are also effective and exhibit the same properties in the method and products of this invention as hydroxyethyl starch does.

It is critical to the invention that a narrow and low molecular weight fraction of starch derivative be utilized. This fraction must have at least 450 glucose units per molecule and not more than 1000 glucose units per molecule. In the preferred embodiments the number of glucose units per molecule is about 500. Among the many reasons for the criticality of the use of this narrow molecular weight fraction of starch derivative, not all of which are necessarily understood at present, are the necessity for easy and uniform miscibility with the material to be preserved, the desirability of achieving uniform swell in the mixture, and the need for easy miscibility with cross-linking agent when present. A preferred HES utilized in experimental work to date is a commercial HES of narrow and low molecular weight range available from Polyscience, Inc. As will be understood, any HES, HPS or PS having the critical characteristics will be operable in the method of the invention.

When the material to be preserved need be kept no more than 30—60 days, it is sufficient to use starch derivative alone as the preservative in this invention. For longer storage periods, the starch derivative should be swelled and lightly crosslinked to a gel, as hereinafter described. The weight of starch derivative per unit volume of material to be preserved may be varied within fairly wide limits depending upon the nature of the material to be preserved, the intended use of the preserved sample and when the mixture is to be gelled, the degree of swell that can be safely tolerated in the receptacle to be used for storage. A typical mix for preserving whole blood employs 0.1 grams ± 0.02 grams of starch derivative per 100 ml of whole blood.

Thorough mixing of the starch derivative and, if present, the cross linking agent and anticoagulant, is extremely important to the successful practice of this invention. Uniform distribution of the protective agent comprising the starch derivative in the material to be preserved is essential. To that end, when the substance to be preserved comprises mammalian tissue it should first be comminuted by grinding if not already in particulate form. The uniform mixing is preferably achieved by a double centrifuging treatment, especially when whole blood or a blood fraction is to be preserved. Any other known method of thorough mixing, such as vortex mixing, may alternatively be used so long as the system is so maintained that extra air or oxygen is not added by the step.

In a preferred embodiment of the invention wherein whole blood or a blood fraction is to be preserved for an indefinite time, the proportions of starch derivative and cross-linking agent are selected so as to maintain the percentage of swell achieved in the mix at 10% + 1% by volume, but other proportions of swell may be preferred with other biological materials or for particular end use purposes.

It has been determined that under the temperature conditions employed pursuant to this invention, the maximum degree of swell is not attained until about 3 days after the ingredients are mixed. Gel set proceeds simultaneously with swell, commencing about 30 minutes after mixing and may also take up to about 3 days to be completed.

According to the invention, the temperature must be maintained at ordinary refrigerator conditions throughout mixing and storage, i.e., at a temperature in the range of from 1.5 to 4.5°C (35° to 40°F). Preferably a constant temperature of about 3.3°C (38°F) is maintained throughout.

In those instances where it is desired that the blood, tissue or component containing live cells be preserved for more than about 60 days, the starch derivative should be reacted in situ immediately after thorough admixture with the substance to be preserved, with an acrylamide-type cross-linking agent. The preferred agent is one prepared by mixing tetramethylethylene diamine with ammonium or potassium persulfate, under sterile conditions, in acetone solution and then adding acrylamide or bisacrylamide dropwise.

This mixture is allowed to stand under sterile conditions until it forms a reaction product which has the appearance of little worm-shaped fragments — a reaction which takes about 60 days to each completion. These fragments are water-soluble. They have been found to effect random cross-linking of the starch derivative when thoroughly mixed therewith under the specified temperature conditions, to a cross-link density of about 1 crosslink for from 20 to 50 glucose units and preferably about 1 crosslink for 50 glucose units.

It has been observed that a specimen of the preferred cross-linking agent, which is worm-shaped and about one cm long takes about 30 minutes, at the temperature conditions specified, to thoroughly permeate the starch derivative mixture by diffusion.

It is believed that the gelation which is effected by the cross-linking agent is dependent upon ionic or electrical attractions and is a colloidal phenomenon, but applicant does not wish to be bound by any particular theory in this regard. Other agents capable of swelling and lightly cross-linking the starch derivative to a gel may be alternatively used.

As has been noted, the composition, whether gelled or not, may be returned to its original fully liquid state by introduction of an isotonic solution, e.g., dilute aqueous Na Cl or Mg Cl$_2$, or by imposing an electric field across the gel, e.g., by microwave device. Alternatively, the storage receptacle may be placed in a warm acetone-water bath. In all such instances, the mix should be brought to room temperature as rapidly as possible and filtered to remove most of the starch derivative and any acrylamide containing compounds that are present. The filtration should be conducted under sterile conditions and the preserved living cell-containing material constituting the filtrate should be used within no more than about 48 hours if it is to be replaced in a mammalian bodily environment. Any starch derivative remaining in the preserved living cell-containing substance will be metabolized by the mammal in its normal metabolic cycle.

While the upper limit of storage time during which living cell-containing substances can be preserved according to the preferred method of this invention has yet to be determined, whole blood gelled in accordance with this invention and stored anaerobically has been checked after 6 months by light scanning and laser meter counting of the live cells and has been found to be in the same state as when freshly drawn from the donor.

A critical parameter of the invention is that the processing and storage of the substance to be preserved must be conducted in an anaerobic atmosphere. This is achieved by purging the receptacle containing such substance with a gas inert to biological materials, mixing such substance with starch derivative while under a blanket of the same gas and storing the mix while still under this gas blanket.

The preferred gas for this purpose is nitrogen because it is more plentiful and less expensive than such inert gases as argon, xenon and krypton and it is inert, under the 1.5 to 4.5°C (35° to 40°F) temperature conditions maintained in accordance with this invention, to biological substances containing living cells. Other inert gases may be substituted for nitrogen, however, without departing from this invention.

It is within the scope of the invention to substitute a proportion, in the order of up to 25% by weight of the starch derivative, with a gellable animal protein such as gelatin. This particular embodiment is not preferred for preserving such products as whole blood or blood fractions intended to be used for transfusion purposes because gelatin and the like are difficult to remove by washing or otherwise and it is believed that at least some patients might experience discomfort from its presence in the bloodstream.

Another disadvantage of this embodiment is that such proteins can not be swelled with acrylamide type crosslinkers as the starch derivatives can be. Since it is believed that the swelling of the starch derivative so as to embed and surround the substance to be preserved thereby effectively insulating that substance even from the protective layer of nitrogen or other gas inert to such substance which surrounds the swelled or gelled mixture, is of particular importance in achieving an indefinite state of suspended animation of the living cells, the fact that the presence of gelatin diminishes the degree of swell is considered to be a disadvantage and imposes the limitation of 25% by weight, based on starch derivative, upon the amount that may be used.

In a particularly preferred embodiment for use in the collection, preservation and storage of mammalian whole blood and blood derivatives, a special closed system receptacle, illustrated in the accompanying drawings, is used. This receptacle is illustrated in its preferred shape which is somewhat similar in plan view to that of a conventional hot water bottle, but in side view is narrower at its top, and wider at its bottom to accommodate the swell of the starch derivative during the preservation and storage steps. It is constructed of a sturdy, but collapsible material, preferably a flexible plastic of wall thickness in the order of 3.175 to 1.588 mm (0.125 to 0.0625 in), though any effective wall thickness will suffice. The plastic must be nonattackable by nitrogen or other inert gas and is nonreactive with and incapable of having any of its ingredients leached out by the mixture comprising starch and blood or blood fraction, even at room temperature or a slightly higher temperature. It is contemplated that any sturdy and suitably flexible, moldable plastic may be used for the receptacle if first given an interior sterile inert coating using methods and materials known in the art. The receptacle is equipped with a bottom loop so that it may be suspended from a hook, e.g. for transfusion purposes.

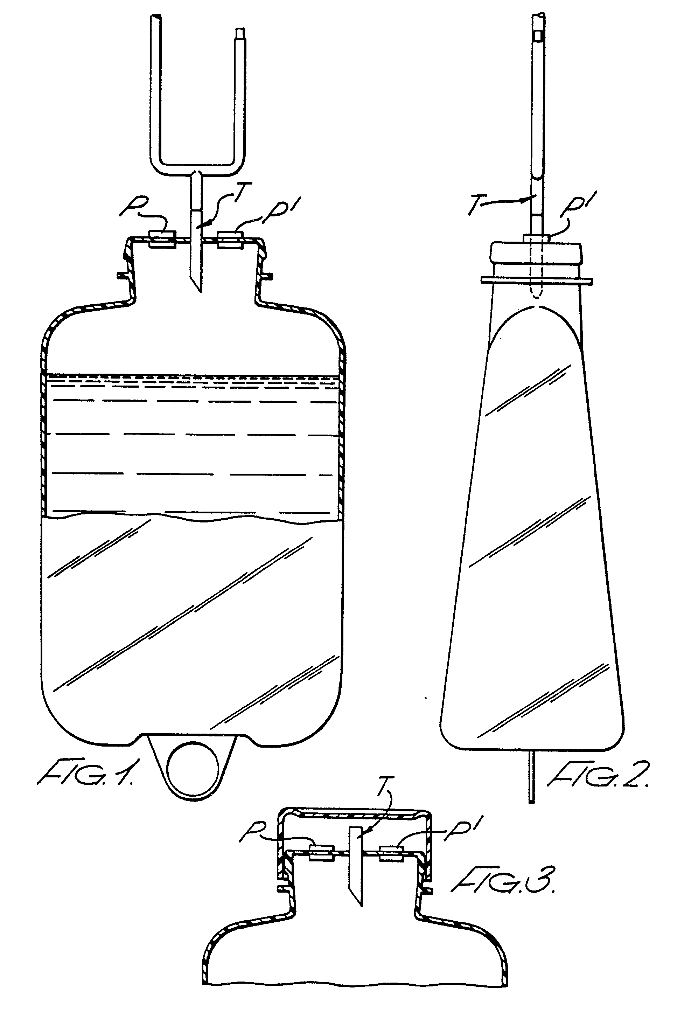

In the drawings, Figure 1 illustrates a plan view of the receptacle in its preferred form. As shown, the receptacle is equipped with two one-way ports, P and P' which allow access to the receptacle but do not allow escape of any substance therefrom, each of which has an antigravity pick sealed into the cover. As depicted in Figure 1, the central two-way means of both access and egress, labelled T, is fitted with a U tube. It could equally as well be fitted with a "Y" blood recipient set, a straight blood recipient set, a special blood infusion set or with blood drip chamber accessories or any other form of conventional gravity blood collection set. Figure 2 simply illustrates a side view of this receptacle, showing its preferred tapered shape, wider at the bottom than at the top. Figure 3 shows the receptacle ready for storage and as stored, with T sealed off and a loose plastic cap fitted over the top. Alternatively this cap may be a snap-top mounted on a hinge or any other convenient form of cap.

When blood or one or more blood fractions are to be preserved according to this invention, the bottle is first partially filled with a solution in sterile water of anticoagulant and starch derivative. Where whole blood is to be stored, this solution contains 0.2 g anticoagulant, preferably ACD, and 0.1 g of starch derivative per 100 ml of sterile water. Thereafter, the whole blood is collected through the collection set which is attached at T, directly into the receptacle. The tube T is thereupon disconnected from the blood collection set and the receptacle is hooked up to a second one filled to the same level through a hookup pick sealed in the cover and a strut which is attached to it, and is centrifuged at 4100 to 7500 g for 8—10 minutes, twice. The strut is removed, a pick is inserted into the already opened port of P and P' and cross-linking agent in the form of a "worm" about 1 centimeter long for each 500 ml of total mix, is added. The receptacle is then purged by attaching a valved needled tube connected to a nitrogen source to the one of P and P' which has previously been opened. Oxygen and air are allowed to escape through T. An oxygen sensor is utilized throughout to show the oxygen level in the receptacle. In a typical operation the nitrogen supply is attached to a power source, and the purge is accomplished, with power on, within a period of 10—30 seconds during which the oxygen level in the receptacle drops, as shown by the oxygen sensor to no more than 1% by volume, preferably 0.5% or less, while the temperature in the receptacle concurrently is dropped to between 1.5 to 4.5°C (35° and 40°F), preferably 3.3°C (38°F). Swelling of the starch derivative becomes noticeable as the temperature lowering occurs. The receptacle is sealed at T; the opened port of P and P' automatically seals itself when the nitrogen pressure is removed. The container may then be stored at 1.5 to 4.5°C (35°—40°F), preferably at 3.3°C (38°F) until needed.

When it is desired to separate freshly collected blood into a red cell and a white cell fraction and preserve both, the procedure is similar but the lighter white cell fraction containing leukocytes and plasma is poured out into a second bottle following the first centrifugation. In this case, cross-linking agent is separately added after both centrifugations to each of the receptacles containing the separated red and white cell fractions.

It will be understood that, within the scope of the invention, various methods may be used for separating crude and such crude components may be purified, e.g. for replication, and then stored in an appropriate receptacle with starch derivative and, if desired, cross-linking agent added before nitrogen purging and cooling. In many cases, these components will require the presence of various additives specific to preservation of their special functions, e.g., antibacterial agents and chain stoppers.

The one port of P and P' on the receptacle which is not perforated during the filling, centrifuging, purging and cooling process is intended to be used when the receptacle is removed from storage, as an inlet port for oxygen and, if desired, isotonic solution such as saline. By introducing a filtration apparatus into the line at T, e.g., preserved whole blood on which the gel has been broken can be filtered and led directly into a transfusion set hooked up to a patient.

## Claims

1. A sealed receptacle containing a mixture of a biological substance containing mammalian living cells and a starch derivative; and

a gas inert to the receptacle and its contents, the receptacle and its contents being maintained at a temperature of 1.5 to 4.5°C (35 to 40°F), characterised in that

the starch derivative is hydroxyethyl starch, hydroxypropyl starch or polystarch containing from 450 to 1000 glucose units per molecule, whereby the living cells are maintained in suspension and the contents are maintained stable and non-deteriorating.

2. The receptacle of claim 1, wherein the biological substance comprises mammalian whole blood, an erythrocyte fraction of mammalian whole blood, a leukocyte fraction of mammalian whole blood, a platelet fraction of mammalian whole blood, a plasma fraction of mammalian whole blood, an immunoglobulin fraction of mammalian whole blood, an antiserum fraction of mammalian whole blood, a purified component fraction of mammalian whole blood, or particulate mammalian tissue.

3. The receptacle of claim 1 or 2 (the biological substance not being particulate mammalian tissue) in which the mixture also contains an anticoagulant for mammalian blood.

4. The receptacle of any one of claims 1 to 3 in which said gas is nitrogen gas.

5. The receptacle of any one of claims 1 to 4 in which the mixture is swelled and gelled with a cross-linking agent.

6. The receptacle of claim 5 in which the cross-linking agent comprises a product formed by reacting tetramethylethylenediamine with acrylamide or bisacrylamide in the presence of a water-soluble persulfate salt and allowing the mixture to stand for at least sixty days.

7. A process for preserving a biological substance comprising living mammalian cells, which comprises the steps of:

adding to a suitable storage receptacle a sterile aqueous solution of a starch derivative;

adding to said sterile aqueous solution in said receptacle said biological substance comprising living mammalian cells;

thoroughly mixing;

purging said receptacle with a gas inert to the receptacle and its contents while lowering the temperature to from 1.5 to 4.5°C (35 to 40°F); and

sealing and storing the receptacle at a temperature from 1.5 to 4.5°C (35 to 40°F), characterised in that

the starch derivative is a water-swellable hydroxyethyl starch, hydroxypropyl starch, or polystarch containing from 450 to 1000 glucose units per molecule, whereby the mixture of starch derivative and biological substance is rendered storage stable.

8. The process of claim 7 wherein the biological substance comprises mammalian whole blood, an erythrocyte fraction of mammalian whole blood, a leukocyte fraction of mammalian whole blood, a platelet fraction of mammalian whole blood, a plasma fraction of mammalian whole blood, an immunoglobulin fraction of mammalian whole blood, an antiserum fraction of mammalian whole blood, a purified component of mammalian whole blood or particulate mammalian tissue.

9. The process of claim 7 or 8 (the biological substance not being particulate mammalian tissue) wherein the sterile aqueous solution also contains an anticoagulant for blood.

10. The process of any of claims 7 to 9 wherein the said gas is nitrogen gas.

11. The process of any of claims 7 to 10 wherein a cross-linking agent for said starch derivative is added after mixing and before purging.

12. The process of claim 11 wherein the cross-linking agent comprises a product formed by reacting tetramethylethylenediamine with acrylamide or bisacrylamide in the presence of a water-soluble persulfate salt and allowing the mixture to stand for at least sixty days.

## Revendications

1. Récipient hermétiquement fermé, contenant un mélange d'une substance biologique contenant des cellules vivantes de mammifère et un dérivé de l'amidon; et

un gaz inerte vis-à-vis du récipient et de son contenu, le récipient et son contenu étant maintenus à une température de 1,5 à 4,5°C (35 à 40°F),

caractérisé en ce que le dérivé de l'amidon est l'hydroxyéthylamidon, l'hydroxypropylamidon ou un poly-amidon contenant de 450 à 1000 motifs glucose par molécule, grâce à quoi les cellules vivantes sont maintenues en suspension et le contenu est maintenu stable et sans subir de détérioration.

2. Récipient selon la revendication 1, dans lequel la substance biologique comprend du sang total de mammifère, une fraction érythrocytes de sang total de mammifère, une fraction leucocytes de sang total de mammifère, une fraction plaquettes de sang total de mammifère, une fraction plasma de sang total de mammifère, une fraction immunoglobuline de sang total de mammifère, une fraction antisérum de sang total de mammifère, une fraction constituants purifiés de sang total de mammifère ou un tissu de mammifère particulaire.

3. Récipient selon la revendication 1 ou 2 (la substance biologique n'étant pas un tissu de mammifère particulaire), dans lequel le mélange contient aussi un anticoagulant vis-à-vis du sang de mammifère.

4. Récipient selon l'une quelconque des revendications 1 à 3, dans lequel ledit gaz est l'azote gazeux.

5. Récipient selon l'une quelconque des revendications 1 à 4, dans lequel le mélange est gonfé et gélifié à l'aide d'un agent de réticulation.

6. Récipient selon la revendication 5, dans lequel l'agent de réticulation comprend un produit formé par la réaction de la tétraméthyléthylènediamine sur l'acrylamide ou le bisacrylamide en présence d'un sel persulfate soluble dans l'eau, et où on laisse le mélange reposer pendant au moins soixante jours.

7. Procédé pour conserver une substance biologique comprenant des cellules vivantes de mammifère, qui comprend les étapes consistant:

à introduire dans un récipient de stockage approprié une solution aqueuse stérile d'un dérivé de l'amidon;

à ajouter à ladite solution aqueuse stérile se trouvant dans ledit récipient ladite substance biologique comprenant des cellules vivantes de mammifère;

à mélanger intimement;

à balayer ledit récipient à l'aide d'un gaz inerte vis-à-vis du récipient et de son contenu, tout en abaissant la température à 1,5—4,5°C (35 à 40°F); et

à sceller et stocker le récipient à une température de 1,5 à 4,5°C (35 à 40°F),

caractérisé en ce que le dérivé de l'amidon est un hydroxyéthylamidon, un hydroxypropylamidon ou un poly-amidon contenant de 450 à 1000 motifs glucose par molécule, gonflables à l'eau, le mélange de dérivé de l'amidon et de la substance biologique étant rendu ainsi stable au stockage.

8. Procédé selon la revendication 7, dans lequel la substance biologique comprend du sang total de mammifère, une fraction érythrocytes de sang total de mammifère, une fraction leucocytes de sang total de mammifère, une fraction plaquettes de sang total de mammifère, une fraction plasma de sang total de mammifère, une fraction immunoglobuline de sang total de mammifère, une fraction antisérum de sang total de mammifère, un constituant purifié de sang total de mammifère, ou un tissu de mammifère particulaire.

9. Procédé selon la revendication 7 ou 8 (la substance biologique n'étant pas un tissu de mammifère particulaire), dans lequel la solution aqueuse stérile contient aussi un anticoagulant pour le sang.

10. Procédé selon l'une quelconque des revendications 7 à 9, dans lequel ledit gaz est l'azote gazeux.

11. Procédé selon l'une quelconque des revendications 7 à 10, dans lequel on ajoute après mélange et avant balayage un agent de réticulation pour ledit dérivé de l'amidon.

12. Procédé selon la revendication 11, dans lequel l'agent de réticulation comprend un produit formé par la réaction de la tétraméthyléthylènediamine sur l'acrylamide ou le bisacrylamide en présence d'un sel persulfate soluble dans l'eau, et en laissant le mélange reposer pendant au moins soixante jours.

**Patentansprüche**

1. Ein verschlossener Behälter, der eine Mischung aus einer biologischen Substanz, die lebende Säugetierzellen umfaßt und ein Stärkederivat enthält, und ein Gas, das bezüglich des Behälters und dessen Inhalt inert ist, wobei der Behälter und sein Inhalt bei einer Temperatur von 1,5 bis 4,5°C (35 bis 40°F) gehalten wird, dadurch gekennzeichnet, daß das Stärkederivat Hydroxyethylstärke, Hydroxypropylstärke oder Polystärke ist, die 450 bis 1000 Glukose-Einheiten/Molekül enthält, wodurch die lebenden Zellen in Suspension gehalten werden und der Inhalt stabil bleibt und nicht schlecht wird.

2. Ein Behälter nach Anspruch 1, in welchem die biologische Substanz Säugetiervollblut, eine Erythrozytenfraktion aus Säugetiervollblut, eine Leukozytenfraktion aus Säugetiervollblut, eine Blutplättchenfraktion aus Säugetiervollblut, eine Plasmafraktion aus Säugetiervollblut, eine Immunoglobulinfraktion aus Säugetiervollblut, eine Antiserumfraktion aus Säugetiervollblut, eine Fraktion von gereinigten Komponenten aus Säugetiervollblut oder Säugetiergewebe in Partikeln umfaßt.

3. Behälter nach Anspruch 1 oder 2 (in welchem die biologische Substanz kein Säugetiergewebe in Partikeln ist), in welchem die Mischung zusätzlich ein Antikoagulans für Säugetierblut enthält.

4. Behälter nach einem der Ansprüche 1 bis 3, in welchem das Gas Stickstoffgas ist.

5. Behälter nach einem der Ansprüche 1 bis 4, in welchem die Mischung mit einem Quervernetzungsagens gequollen und geliert wird.

6. Ein Behälter nach Anspruch 5, in welchem das Quervernetzungsagens ein Produkt umfaßt, welches dadurch gebildet wird, daß Tetramethylethylendiamin mit Acrylamid oder Bisacrylamid im Beisein eines wasserlöslichen Persulfatsalzes umgesetzt wird und anschließend die Mischung für mindestens 60 Tage stehen gelassen wird.

7. Ein Verfahren zum Haltbarmachen einer biologischen Substanz, die lebende Säugetierzellen enthält, welches die folgenden Stufen umfaßt:

Zugabe einer sterilen wäßrigen Lösung eines Stärkederivats in einen geeigneten Lagerbehälter,

Zugabe der biologischen Substanz, die lebende Säugetierzellen enthält zu der sterilen wäßrigen Lösung in dem Behälter,

gründliches Mixen,

Begasen des Behälters mit einem Gas, welches bezüglich des Behälters und seines Inhaltes inert ist, wobei die Temperatur auf 1,5 bis 4,5°C (35—40°F) abgesenkt wird, und

Verschließen und Lagern des Behälters bei einer Temperatur von 1,5 bis 4,5°C (35 bis 40°F) dadurch gekennzeichnet, daß das Stärkederivat eine wasserquellbare Hydroxyethylstärke, Hydroxypropylstärke oder Polystärke ist, die 450 bis 1000 Glukoseeinheiten/Molekül enthält, wodurch die Mischung der Stärkederivate und der biologischen Substanz lagerstabil gemacht wird.

8. Ein Verfahren nach Anspruch 7, in welchem die biologische Substanz Säugetiervollblut, eine Erythrozytenfraktion aus Säugetiervollblut, eine Leukozytenfraktion aus Säugetiervollblut, eine Blutplättchenfraktion aus Säugetiervollblut, eine Plasmafraktion aus Säugetiervollblut, eine Immunoglobulinfraktion aus Säugetiervollblut, eine Antiserumfraktion aus Säugetiervollblut, eine gereinigte Komponente aus Säugetiervollblut oder Säugetiergewebe in Partikeln enthält.

9. Ein Verfahren nach Anspruch 7 oder 8 (in welchem die biologische Substanz kein Säugetiergewebe in Partikeln ist), in welchem die sterile wäßrige Lösung zusätzlich ein Antikoagulans für das Blut enthält.

10. Ein Verfahren nach einem der Ansprüche 7 bis 9, in welchem das Gas Stickstoffgas ist.

11. Ein Verfahren nach einem der vorhergehenden Ansprüche 7 bis 10, in welchem nach dem Mischen und vor dem Begasen ein Quervernetzungsagens für das Stärkederivat zugegeben wird.

12. Ein Verfahren nach Anspruch 11, in welchem das Quervernetzungsagens ein Produkt umfaßt, welches dadurch gebildet wird, daß Tetramethylethylendiamin mit Acrylamid oder Bisacrylamid im Beisein eines wasserlöslichen Persulfatsalzes umgesetzt wird und anschließend die Mischung wenigstens 60 Tage stehen gelassen wird.

0 061 277

FIG.1.

FIG.2.

FIG.3.

1